# EUROPEAN PATENT SPECIFICATION

(11) **EP 3 277 529 B1**
(45) Date of publication and mention of the grant of the patent: **04.10.2023**
(21) Application number: 16774423.4
(22) Date of filing: 04.04.2016
(51) Int. Cl.: B60H 1/00, H02H 7/085, H02J 7/14, H02J 7/00, B60H 1/32, F24F 11/00, B60R 16/03

(54) **SYSTEMS AND METHODS FOR DISCONNECTING A DC LOAD FROM A DC POWER SOURCE**
SYSTEME UND VERFAHREN ZUR TRENNUNG EINER GLEICHSTROMLAST VON EINER GLEICHSTROMQUELLE
SYSTÈMES ET PROCÉDÉS POUR DÉCONNEXION D'UNE CHARGE À CC D'UNE SOURCE D'ALIMENTATION À CC

(30) Priority: 03.04.2015 US 201562142970 P
(43) Date of publication of application: 07.02.2018
(73) Proprietor: Tiger Tool International, Incorporated, Abbotsford, BC V2S 7P1 (CA)
(72) Inventor: ANDREWS, Michael, Abbotsford, BC V2S 7P1 (CA)
(74) Representative: Boult Wade Tennant LLP
(86) International application number: PCT/US2016/025923
(87) International publication number: WO 2016/161447

(56) References cited:
- EP-A2- 1 219 478
- DE-A1-102005 030 539
- RU-C1- 2 157 037
- RU-C2- 2 425 436
- US-A- 5 808 441
- US-A- 6 116 513
- US-A1- 2002 157 414
- US-A1- 2005 001 587
- US-A1- 2011 114 405
- US-A1- 2014 244 107

## Description

### TECHNICAL FIELD

The present invention relates to systems and methods for disconnecting DC loads from a DC power source.

### BACKGROUND

Utility power is typically made available as an AC power signal distributed from one or more centralized sources to end users over a power distribution network. However, utility power is unavailable for certain structures. For example, movable structures such as vehicles do not have access to utility power when moving and can be connected to power distribution network when parked only with difficulty. Similarly, remote structures such as cabins and military installations not near the utility power distribution network often cannot be practically powered using utility power.

DC power systems including batteries are often employed to provide power when utility power is unavailable. For example, trucks and boats typically employ a DC power system including a battery array to provide power at least to secondary vehicle electronics systems such as communications systems, navigation systems, ignition systems, heating and cooling systems, and the like. Shipping containers and remote cabins that operate using alternative primary power sources such as solar panels or generators also may include DC power systems including a battery or array of batteries to operate electronics systems when primary power is unavailable. Accordingly, most modern vehicles and remote structures use battery power sufficient to operate, at least for a limited period of time, electronics systems such as secondary vehicle electronics systems.

The capacity of a battery system used by a vehicle or remote structure is typically limited by factors such as size, weight, and cost. For example, a vehicle with an internal combustion engine may include a relatively small battery for use when the engine is not operating; a large battery array is impractical for vehicles with an internal combustion engine because the size of the batteries takes up valuable space and the weight of the batteries reduces vehicle efficiency when the vehicle is being moved by the engine. All electric vehicles have significantly greater battery capacity, but that battery capacity is often considered essential for the primary purpose of moving the vehicle, so the amount of battery capacity that can be dedicated to secondary vehicle electronics systems is limited. Battery systems employed by remote structures must be capable of providing power when the alternative power source is unavailable, but factors such as cost, size, and weight reduce the overall power storage capacity of such systems.

Heating and cooling systems have substantial energy requirements. Vehicles such as trucks or boats typically rely on the availability of the internal combustion engine when heating or cooling is required. When heating or cooling is required when the vehicle is parked or the boat is moored for more than a couple of minutes, the internal combustion engine will be operated in an idle mode solely to provide power to the heating and cooling system. Engine idling is inefficient and creates unnecessary pollution, and anti-idling laws are being enacted to prevent the use of idling engines, especially in congested environments like cities, truck stops, and harbors. For remote structures such as cabins or shipping containers, heating and cooling systems can be a major draw on battery power. Typically, an alternative or inferior heating or cooling source such as a wood burning stove, fans, or the like are used instead of a DC powered heating and cooling system.

In vehicles and remote structures, the power supply system may comprise a battery or solar panel array that generates a low voltage DC power signal. In this case, the power supply system is typically not tightly integrated with the active electronics, such as converters, compressors, and motors, forming the load. The load thus has limited if any capability to control the operation of the power supply. In failure situations, the power supply may continue to supply low voltage, high current power to the load. Circuit breakers, fuses, and other power disconnect means at the load are sometime incapable of disconnecting the power supply system from the load before damage to the load occurs.

The need thus exists for improved disconnect systems and methods for disconnecting a DC power supply system from a DC load where the power supply system and load are not tightly integrated.
US 2002/157414 A1 discloses a vehicle air-conditioning apparatus for idle stopping vehicles capable of performing both cooling and heating operations.

### SUMMARY

A disconnect system to be connected between a DC power source comprising a battery system and a load comprising a load of a vehicle is provided according to claim 1.

A heating/cooling system for a vehicle having a DC power source comprising a battery system is provided according to claim 4.

A method of heating and cooling a vehicle having a DC power source comprising a battery system is provided according to claim 5.

### BRIEF DESCRIPTION OF THE DRAWINGS

Figure 1 is a block diagram of a first example disconnect system of the present invention;
Figure 2 is a block diagram of a portion of a second example disconnect system of the present invention;
Figure 3 is a block diagram of a portion of a third example disconnect system of the present invention;
Figure 4 is a block diagram of a portion of a fourth example disconnect system of the present invention; and
Figure 5 is a block diagram of a fifth comparative example disconnect system.

### DETAILED DESCRIPTION

The present invention may be embodied in a number of different example configurations, and several examples of disconnect systems and methods constructed in accordance with the scope of the appended claims.

### I. First Example Disconnect Switch System

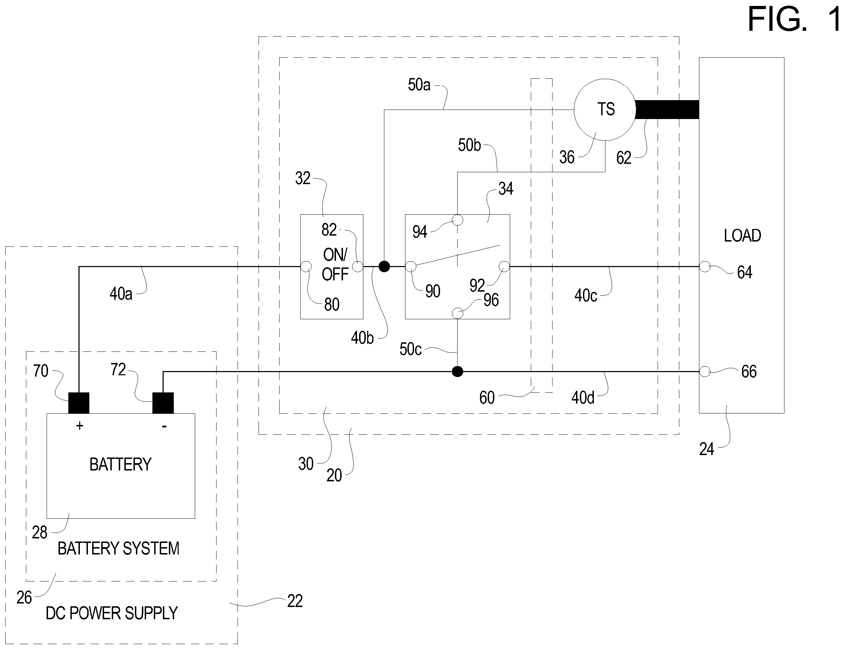

Referring initially to Figure 1 of the drawing, depicted therein is a first example disconnect system 20 of the present invention. The first example disconnect system 20 is capable of disconnecting a DC power supply system 22 from a DC load 24. In the example shown in Figure 1, the example DC power supply system 22 comprises a battery system 26 comprising one or more batteries 28.

The first example disconnect system 20 comprises a switch array 30 comprising a master switch 32, a relay switch 34, and at least one thermostat switch 36. The example switch array of the first example disconnect system 20 further comprises first, second, third, and fourth power cables 40a, 40b, 40c, and 40d and first, second, and third control wires 50a, 50b, and 50c. The third and fourth power cables 40c and 40d and the first and second control wires 50a and 50b form a wire harness 60 that extends between the power supply system 22 and the load 24. In particular, as shown in Figure 1, the wire harness 60 extends between the disconnect system 20 and the load 24 such that the at least one thermostat switch 36 is in contact with at least one sensed portion 62 of load 24. Further, the third and fourth power cables 40c and 40d are connected to a positive load terminal 64 and a negative load terminal 66, respectively, of the load 24.

The example battery system 26 defines a positive power supply terminal 70 and a negative power supply terminal 72.

The master switch 32 defines a first master switch terminal 80 and a second master switch terminal 82 and is manually operable between a normally open state and a closed state. In the normally open state, current cannot flow between the terminals 80 and 82. In the closed state, current is allowed to flow between the terminals 80 and 82. The example master switch 32 stays in the closed state so long as current flows between the terminals 80 and 82 but resets to the open state when current no longer flows between the terminals 80 and 82. After the master switch 32 resets to the open state, the master switch 32 must be manually operated from the open state to the closed state before current is again allowed to flow between the terminals 80 and 82.

The relay switch 34 defines a first power terminal 90, a second power terminal 92, a first control terminal 94, and a second control terminal 96. The relay switch 34 is operable in a normally open state and a closed state. The example relay switch 34 is normally open but can be closed by the application of an appropriate control signal to the first control terminal 94. The control signal must be present at the first control terminal 94 for the example relay switch 34 to be held in the closed state. Whenever the control signal is removed from the first control terminal 94, the relay switch 34 automatically returns to the normally open state.

The example thermostat switch 36 is normally closed but opens when the temperature thereof exceeds a predetermined maximum temperature level.

The first example disconnect system 20 is assembled as follows. The first power cable 40a is connected to the first master switch terminal 80, the second power cable 40b is connected between the second master switch terminal 82 and the first power terminal 90. The third power cable 40c is connected to the second power terminal 92. The first control wire 50a is connected at one end to an electrical node formed by second master switch terminal 82, the second power cable 40b, and the first power terminal 90. The other end of the first control wire 50a is also connected to the at least one thermostat switch 36. The second control wire 50b is connected at one end to the at least one thermostat switch 36 and at the other end to the first control terminal 94. One end of the third control wire 50c is connected to the second control terminal 96. At this point, the fourth power cable 40d is connected at an electrical node formed by the other end of the third control wire 50c (e.g., third control wire 50c and the fourth power cable 40d could both be connected directly to the battery negative terminal 72). The physical locations of the various electrical nodes described herein can be selected based on considerations such as the mounting locations of the master switch 32 and relay switch 34 and the optimum bundling of the various cables forming the wire harness 60.

It should be noted that the example disconnect system 20 requires no knowledge of the details or components of the DC power supply system 22 or the load 24.

In the example depicted in Figure 1, the example DC power supply system 22 is formed by or comprises a battery system 26 comprising one or more batteries 28. However, the example disconnect system 20 would operate equally well with other example DC power supply systems comprising, for example, one or more of a solar panel array, a generator, a wind or water powered turbine, or the like in addition to one or more batteries. In this case, the example disconnect system 20 would simply be sized to accommodate the power capacity of the DC power supply system.

Similarly, the example load 24 is preferably a vehicle heating and cooling system, and the present invention is of particular significance in that context, but the example disconnect system 20 could be used with any DC load having similar power requirements without significant modification. The only customization of the example disconnect system 20 for a particular load would be to identify one or more appropriate sensed portions of the load, provide a thermostat switch in series in the control circuit for each identified sensed portion, and attach the provided thermostat switches to each of the sensed portions as will be described in further detail below.

Once the example disconnect system 20 is formed as described above, it is physically supported relative to and electrically connected to the DC power supply system 22 and the load 24. In particular, the master switch 32 and relay switch 34 are mounted so that the master switch 32 is easily accessible and the both of the switches 32 and 34 are securely supported for a particular mounting environment. One or both of these switches 32 and 34 can be mounted on the housing (not shown) of the DC power supply 22, the housing (not shown) of the load 24, or one on the DC power supply housing and the other on the load housing.

The cable harness 60 is then used to electrically connect the example disconnect system 20 to the DC power supply 22 and the load 24. In particular, the free end of the first power cable 40a and one free end of the fourth power cable 40d are connected to the positive and negative terminals 70 and 72, respectively, of the battery 28. The remaining free ends of the third and fourth power cables 40c and 40d are then connected to the positive and negative load terminals 64 and 66, respectively. The at least one thermostat switch 36 is then physically secured or detachably attached to the at least one sensed portion 62 of the load 24 such that heat energy in the at least one sensed portion 62 is transmitted to the at least one thermostat switch 36.

With the example disconnect system 20 so connected between the DC power supply 22 and the load 24, the example master switch 32 is manually operable from the normally open state in which current is prevented from flowing from the DC power supply 22 to the load 24 through the relay switch 34 (when in the closed state) to a closed state in which current is allowed to flow from the DC power supply 22 to the load 24 through the relay switch 34 (in either state). The master switch 32 stays in the closed state only as long as current continues to flow through the master switch 32. When current no longer flows through the master switch 32, the master switch resets to the open state until manually operated from the open state to the closed state. Accordingly, when the master switch 32 is in the closed state, current flows in a power circuit from the battery 28, through the relay switch 34 (when in the closed state), through the load 24, and back to the battery 28.

The example relay switch 34 is normally open but is closed when current flows in a control circuit from the battery 28, through the first control wire 40a, through the at least one thermostat switch 36 (when in the closed state), through the second control wire 40b, through the relay switch 34, and back to the battery 28. If current is prevented from flowing through this control circuit, the example relay switch 34 is reset to its normally open configuration and current is prevented from flowing through the power circuit.

Accordingly, so long as the at least one thermostat switch 36 is in its closed state, the master switch 32 controls the flow of current from the battery 28 and through the load 24. In particular, the disconnect system 20 starts in an initial condition in which the master switch 32 is in the normally open state, the relay switch 34 is in the normally open state, and the at least one thermostat switch 36 is in the normally closed state. When the disconnect system 20 is in this initial state, manually displacing the master switch 32 into an ON position places the master switch 32 into the closed state and allows current to flow through the control circuit, and current flowing through the control circuit energizes the relay switch 34, placing the relay switch into the closed state and thereby allowing current to flow from the DC power supply 22 to the load 24 through the relay switch 34. At this point, the disconnect system 20 is in an energized state. Manually displacing the master switch 32 into an OFF position places the master switch 32 into the open state and prevents current from flowing through the control circuit, thereby de-energizing the relay switch and returning the disconnect system to its initial state.

If the temperature of the at least one thermostat switch 36 exceeds the predetermined maximum temperature level, the at least one thermostat switch 36 changes to the open state. When the thermostat switch 36 is in the open state, the thermostat switch 36 prevents current from flowing through the control circuit 50 and thus prevents the disconnect system 20 from changing from the initial state to the energized state. If the disconnect system 20 is already in the energized state and the thermostat switch 36 changes from the closed state to the open state, the thermostat switch 36 disrupts the flow of current through the control circuit 50 and thus changes the disconnect system 20 from the energized state to the initial state. Current thus cannot flow from the DC power supply 22 to the load 24 whenever the temperature of the thermostat switch 36 exceeds the predetermined maximum temperature level.

Further, when current no longer flows through the power circuit including the DC power supply 22 and the load 24, the master switch 32 resets to its open state and will not return to its closed state without human intervention (e.g., manually operation of the master switch 32). The interaction of the control circuit with the power circuit thus prevents the disconnect system from cycling from the initial state back into the energized state without human intervention. Such intervention should not occur without inspection of the power circuit to determine the source of any overheating that may have opened the at least one example thermostat switch 36.

Figure 1 depicting the first example disconnect system 20 shows a single thermostat switch 36 physically attached to or arranged adjacent to a single sensed portion 62 of the load 24 associated with heat-related failure. More than one sensed portion associated with heat-related failure may be identified and more than one thermostat switch may be provided in alternate implementations of a disconnect system of the present invention.

### II. Second Example Disconnect Switch System

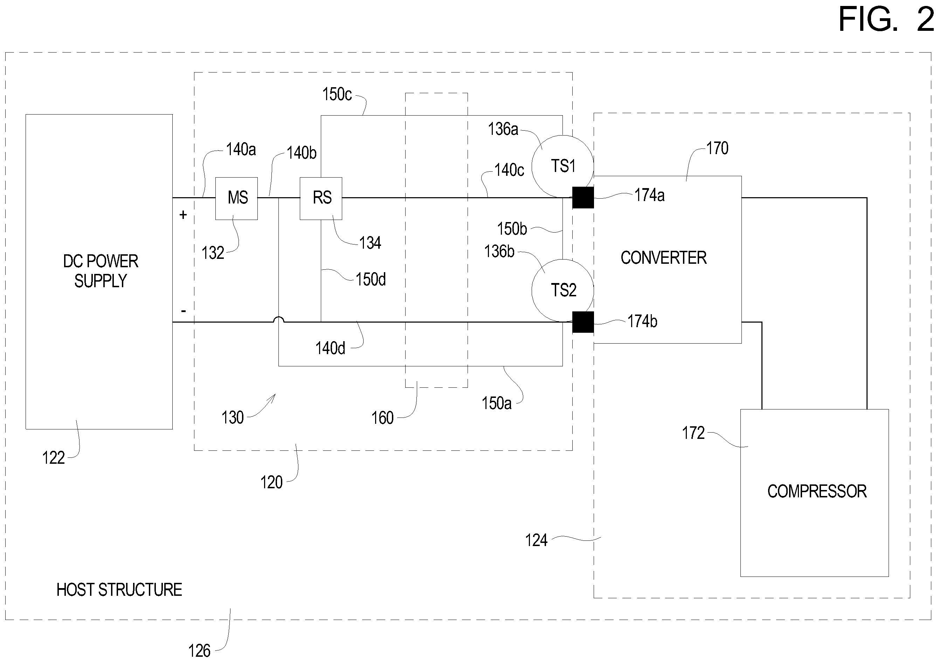

For example, Figure 2 illustrates a second example disconnect system 120 of the present invention. The second example disconnect system 120 is configured to connect a DC power supply 122 to a load 124. The example load 124 is a vehicle heating and cooling system, and the disconnect system 120, DC power supply 122, and load 124 are depicted as part of a host structure 126. In this application, the term "host structure" refers to a vehicle or a remote structure that is not connected to utility power and operates instead based on low voltage DC power. Examples of vehicles include trucks, automobiles, shipping containers, and boats. Examples of remote structures include shipping containers, communications towers, or off-the-grid cabins. With remote structures, and possibly with a vehicle, the example DC power supply 122 may comprise an alternative energy source such as a solar power array or generator instead of or in addition to one or more batteries.

Like the first example disconnect system 20 described above, the example disconnect system 120 comprises a switch array 130 comprising master switch 132, a relay switch 134, and first and second thermostat switches 136a and 136b. The example switch array 130 further comprises first, second, third, and fourth power cables 140a, 140b, 140c, and 140d and first, second, third, and fourth control wires 150a, 150b, 150c, and 150d. The third and fourth power cables 140c and 140d and the first, second, and third control wires 150a, 150b, and 150c form a wire harness 160 that extends between the power supply system 122 and the load 124.

Figure 2 also illustrates that the example load 124 comprises a converter 170 and a compressor 172. The example wire harness 160 extends between the disconnect system 20 and the load 24 such that the third and fourth power cables 140c and 140d are connected to a positive converter terminal 174a and a negative converter terminal 174b, respectively, of the converter 170. Figure 2 further illustrates that the first and second thermostat switches 136a and 136b are each in thermal contact with one of the positive converter terminal 174a and the negative converter terminal 174b.

The positive and negative converter terminals 174a and 174b thus form first and second sensed portions of the example load 124. In particular, the positive and negative converter terminals 174a and 174b tend to heat up under at least one common fault condition that occurs when a power circuit formed by the DC power supply 122 and load 124 fails to operate within a predetermined set of operating parameters. When a temperature of one or both of these terminals 174a and 174b exceeds the predetermined temperature threshold associated with either of the first and second thermostat switches 136a and 136b, one or both of the first and second thermostat switches 136a and 136b will open. When either of the first and second thermostat switches 136a and 136b is in the open state, current is prevented from flowing through a control circuit including the relay switch 134. When current stops flowing through the control circuit, the relay switch 134 opens, preventing flow of current through the power circuit. As discussed above with reference to the first example disconnect system 20, the disconnect system 120 will not return to the energized state without manual operation of the master switch 132.

### III. Third Example Disconnect Switch System

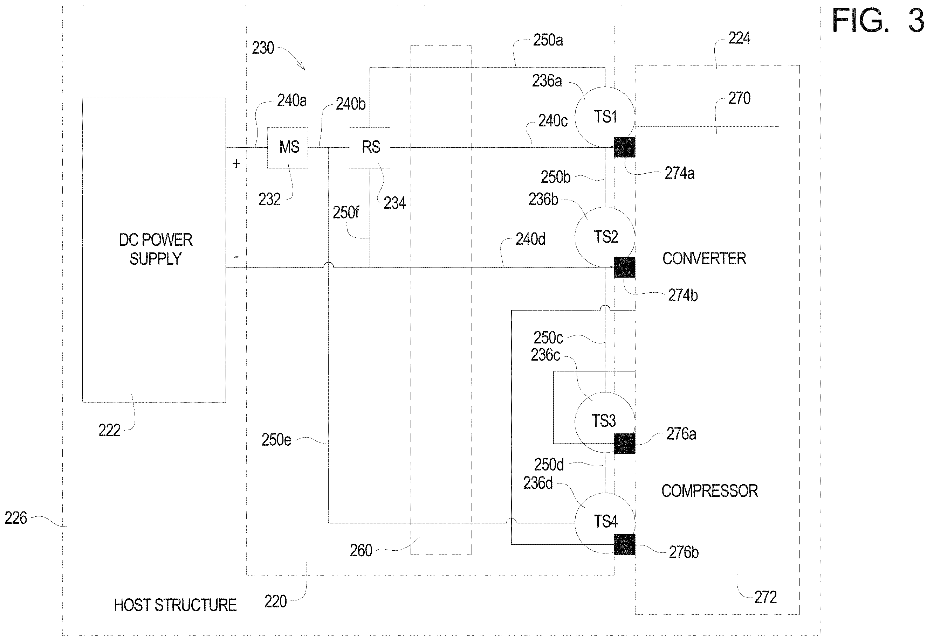

Figure 3 illustrates a third example disconnect system 220 of the present invention. The third example disconnect system 220 is configured to connect a DC power supply 222 to a load 224. The example load 224 is a vehicle heating and cooling system, and the disconnect system 220, DC power supply 222, and load 224 are depicted as part of a host structure 226.

The third example disconnect system 220 comprises a switch array 230 comprising master switch 232, a relay switch 234, and first, second, third, and fourth thermostat switches 236a, 236b, 236c, and 236d. The example switch array 230 further comprises first, second, third, and fourth power cables 240a, 240b, 240c, and 240d and first, second, third, fourth, fifth, and sixth control wires 250a, 250b, 250c, 250d, 250e, and 250f. The third and fourth power cables 240c and 240d and the first, second, third, fourth, and fifth control wires 250a, 250b, 250c, 250d, and 250e form a wire harness 260 that extends between the power supply system 222 and the load 224.

Figure 3 also illustrates that the example load 224 comprises a converter 270 and a compressor 272. The example wire harness 260 extends between the disconnect system 220 and the load 224 such that the third and fourth power cables 240c and 240d are connected to a positive converter terminal 274a and a negative converter terminal 274b, respectively, of the converter 270. Figure 3 further illustrates that the compressor 272 comprises a positive compressor terminal 276a and negative compressor terminal 276b. Figure 3 further illustrates that the first, second, third, and fourth thermostat switches 236a, 236b, 266c, and 236d are each in thermal contact with one the terminals 274a, 274b, 276a, and 276b.

The positive and negative converter terminals 274a and 274b thus form first and second sensed portions of the example load 224. In particular, the positive and negative converter terminals 274a and 274b or the positive and negative compressor terminals 276a and 276b tend to heat up under at least one fault condition that occurs when a power circuit formed by the DC power supply 222 and load 224 fails to operate within a predetermined set of operating parameters. When a temperature of one or both of these terminals 274a and 274b exceeds the predetermined temperature threshold associated with any of the thermostat switches 236a, 236b, 236c, or 236d, one or more of the thermostat switches 236a, 236b, 236c, or 236d will open, preventing current from flowing through a control circuit including the relay switch 234. When current stops flowing through the control circuit, the relay switch 234 opens, preventing flow of current through the power circuit. As discussed above with reference to the first example disconnect system 20, the disconnect system 220 will not return to the energized state without manual operation of the master switch 232.

### IV. Fourth Example Disconnect Switch System

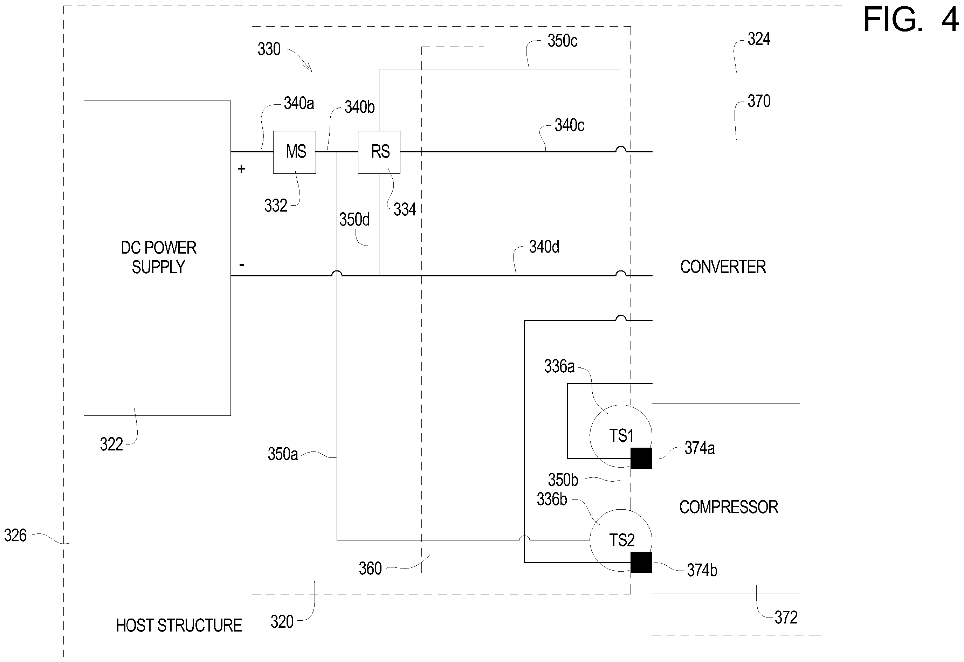

Figure 4 illustrates a fourth example disconnect system 320 of the present invention. The fourth example disconnect system 320 is configured to connect a DC power supply 322 to a load 324. The example load 324 is a vehicle heating and cooling system, and the disconnect system 320, DC power supply 322, and load 324 are depicted as part of a host structure 326.

The example disconnect system 320 comprises a switch array 330 comprising master switch 332, a relay switch 334, and first and second thermostat switches 336a and 336b. The example switch array 330 further comprises first, second, third, and fourth power cables 340a, 340b, 340c, and 340d and first, second, third, and fourth control wires 350a, 350b, 350c, and 350d. The third and fourth power cables 340c and 340d and the first, second, and third control wires 350a, 350b, and 350c form a wire harness 360 that extends between the power supply system 322 and the load 324.

Figure 4 also illustrates that the example load 324 comprises a converter 370 and a compressor 372. The example wire harness 360 extends between the disconnect system 320 and the load 324 such that the third and fourth power cables 340c and 340d are connected to the load 324. Figure 4 further shows that the compressor 372 comprises a positive compressor terminal 374a and a negative compressor terminal 374b, respectively. Figure 4 further illustrates that the first and second thermostat switches 336a and 336b are each in thermal contact with one of the positive compressor terminal 374a and the negative compressor terminal 374b.

The positive and negative compressor terminals 374a and 374b thus form first and second sensed portions of the example load 324. In particular, the positive and negative compressor terminals 374a and 374b tend to heat up under at least one common fault condition that occurs when a power circuit formed by the DC power supply 322 and load 324 fails to operate within a predetermined set of operating parameters. When a temperature of one or both of these terminals 374a and 374b exceeds the predetermined temperature threshold associated with either of the first and second thermostat switches 336a and 336b, one or both of the first and second thermostat switches 336a and 336b will open. When either of the first and second thermostat switches 336a and 336b is in the open state, current is prevented from flowing through a control circuit including the relay switch 334. When current stops flowing through the control circuit, the relay switch 334 opens, preventing flow of current through the power circuit. As discussed above, the disconnect system 320 will not return to the energized state without manual operation of the master switch 332.

### V. Fifth Example Disconnect Switch System

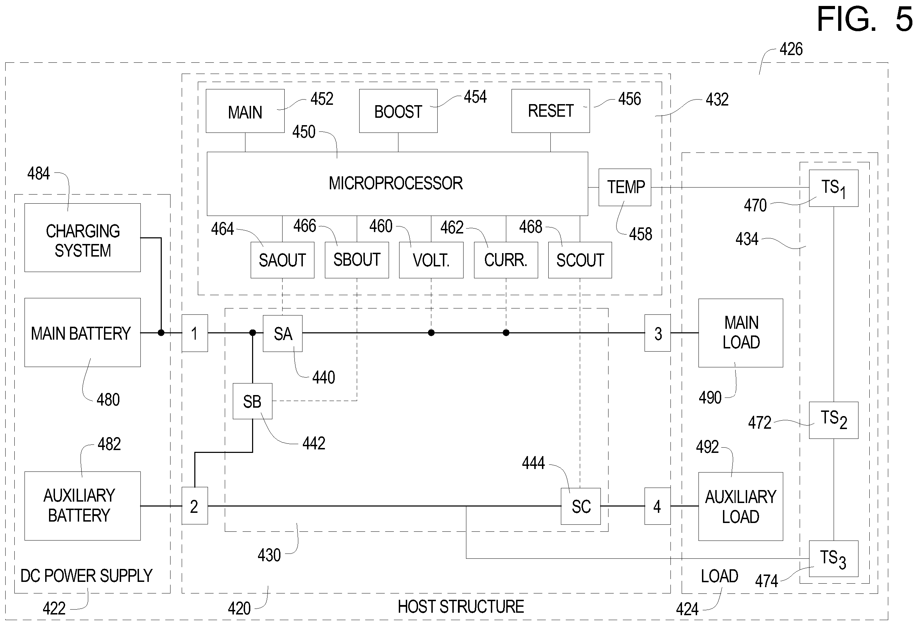

Referring now to Figure 5 of the drawing, depicted therein is a fifth example disconnect switch system 420, not being part of the claimed invention. The fifth example disconnect system 420 is configured to connect a DC power supply 422 to a load 424. The example load 424 is a vehicle heating and cooling system, and the disconnect system 420, DC power supply 422, and load 424 are depicted as part of a host structure 426 formed by the vehicle. The DC power supply 422 and load 424 may be or comprise the components of the DC power supply and load of any of the alternate example switch disconnect systems 20, 120, 220, and 320 described above.

The example disconnect system 420 comprises a relay switch array 430, a controller 432, and a control switch array 434. The example relay switch array 430 comprises a first control switch 440, a second control switch 442, and a third control switch 444. The example controller 432 comprises a microprocessor 450, first, second, and third input switches 452, 454, and 456, a temperature signal input circuit 458, a voltage input circuit 460, a current input circuit 462, and first, second, and third switch drive circuits 464, 466, and 468. The example control switch array 434 comprises first, second, and third thermostat switches 470, 472, and 474.

The example DC power supply 422 comprises a main battery 480, an auxiliary battery 482, and a charging system 484. The charging system 484 is operatively connected to the main battery 480. The example load 424 comprises a chassis load 490 and an auxiliary load 492.

The example control switch array 434 is arranged such that each of the thermostat switches 470, 472, and 474 are arranged at predetermined sensed locations within the example load 424 indicative of over temperature conditions that may damage the DC power supply 422 and/or the load 424. The example thermostat switches 470, 472, and 474 are connected in series and, in the example disconnect system 420, are arranged such that a small current from the auxiliary battery 482 flows through the thermostat switches 470, 472, and 474 and into the temperature signal input circuit 458. So long as an over temperature condition does not exist at any of the sensed locations associated with the thermostat switches 470, 472, and 474, current flows to the temperature signal input circuit 458 and the microprocessor 450 determines that no over temperature conditions are associated with the load 424. If an over temperature condition does exist at any one or more of the sensed locations associated with the thermostat switches 470, 472, and 474, the affected switch 470, 472, and/or 474 opens, preventing current flow to the temperature signal input circuit 458. In response, the microprocessor 450 determines that an over temperature condition is associated with the load 424. The relay switch array 430, the controller 432, and the control switch array 434 thus form a control circuit that disconnects at least a portion of the load 424 from at least a portion of the DC power supply 422 under at least one over temperature condition.

The example DC power supply 422 is connected to the example load 424 through the relay switch array 430. In particular, the main battery 480 selectively passes a MAIN power signal to the chassis load 490 through the first control switch 440. The MAIN power signal is also selectively passed to the auxiliary battery 482 through the second control switch 442. The auxiliary battery 482 selectively passes an AUXILIARY power signal to the auxiliary load 492 through the third control switch 444. The MAIN power signal may also be selectively passed to the auxiliary load 492 through the third control switch 444 depending on the status of the second control switch 442.

The example microprocessor 450 is programmed and configured to operate the first, second, and third control switches 440, 442, and 444 based on control signals generated by the first, second, and third input switches 452, 454, and 456, a temperature signal input circuit 458, a voltage input circuit 460, a current input circuit 462.

The example relay switch array 430 and example controller 432 are or may be arranged on a circuit board defining connectors 1, 2, 3, and 4. The connectors 1 and 2 are connected to the DC power supply 422, and, in particular, the main battery 480 and auxiliary battery 482, respectively. The connectors 3 and 4 are connected to the load 424 and, in particular, to the chassis load 490 and the auxiliary load 492, respectively.

Referring now to the operation of the example microprocessor 450, the first, second, and third input switches 452, 454, and 456 are physically operated by a user to generate MAIN, BOOST, and RESET signals, respectively. The temperature signal input circuit 458 generates a TEMP signal when any one or more of the thermostat switches 470, 472, and 474 determine an over temperature condition within the load 424. The voltage input circuit 460 and current input circuit 462 generate VOLTAGE and CURRENT signals indicative of voltage and current of the MAIN power signal passing from the main battery 480 to the chassis load 490.

The example microprocessor 450 is configured to generate SAOUT, SBOUT, and SCOUT signals that operate the first, second, and third switch drive circuits 464, 466, and 468 to place the first, second, and third control switches 440, 442, and 444, respectively, in open and closed configurations.

The example microprocessor 450 operates a software program that is programmed to implement logic as generally follows.

Initially, the microprocessor 450 is preprogrammed with a voltage threshold and a current threshold determined based on parameters of the host structure 426. The current threshold is selected to provide overcurrent protection of the components of the DC power supply 422 and the load 424. The voltage threshold is selected to ensure sufficient voltage remains in the DC power supply 422 to meet certain start-up conditions, such as the ability of the DC power supply 422 to start the engine of a vehicle forming the hose structure 426.

So preprogrammed, the microprocessor 450 is in a READY mode. By operating the first input switch 452 to generate the MAIN signal, the microprocessor 450 is placed in a NORMAL mode in which the microprocessor 450 generates the SAOUT signal such that the first control switch 440 is placed in a closed configuration to allow current to flow to the chassis load 490. In a NORMAL mode, the microprocessor 450 generates the SCOUT signal such that the third control switch 444 is placed in a closed configuration to allow current to flow to the auxiliary load 492.

Further, in the NORMAL mode the microprocessor 450 continually monitors the VOLTAGE signal generated by the voltage input circuit 460. If the VOLTAGE signal indicates that the charging system 484 is operating, the microprocessor 450 will close the second control switch 442, allowing current to flow from the charging system 484 to the auxiliary battery 482. For example, in a battery system in which the main battery 480 and the auxiliary battery 482 are formed by one or more 12 volt batteries, the charging system 484 will typically operate at substantially between 13-15 volts. The microprocessor 450 will thus typically also store a second predetermined voltage value (e.g. 13 volts), and the microprocessor 450 will close the second control switch 442 when the measured VOLTAGE signal exceeds that second predetermined voltage value to allow charging of the auxiliary battery 482 without adversely affect the charge on the main battery 480.

The microprocessor 450 then monitors the TEMP, VOLTAGE, and CURRENT signals. If the TEMP signal is present, the VOLTAGE signal is above the predetermined voltage threshold, and the CURRENT signal is below the predetermined current threshold, the microprocessor 450 remains in the NORMAL mode in which power is allowed to flow from the main battery 480 to the chassis load 490. If, however, the TEMP signal is not present, the VOLTAGE signal is at or below the predetermined voltage threshold, and/or the CURRENT signal is at or above the predetermined current threshold, the microprocessor 450 changes to an INTERRUPT mode in which the first control switch 440 is opened, and power is prevented from flowing from the main battery 480 to the chassis load 490. When the fault condition is cleared, operation of the third input switch 456 generates a RESET signal that places the microprocessor 450 back into the READY mode.

By operating the second input switch 454 to generate the BOOST signal, the microprocessor 450 is placed in a BOOST mode in which the microprocessor 450 generates the SBOUT signal such that the second control switch 442 is placed in a closed configuration to allow current to flow from the auxiliary battery 482 to the chassis load 490.

In addition, the functions of the first, second, and third input switches 452, 454, and 456 may be duplicated or replaced by a wired or wireless ancillary control device (not shown) coupled to the microprocessor 450 to allow the user to generate the MAIN, BOOST, and RESET signals without direct physical access to buttons that activate the input switches 452, 454, and 456 mounted on the circuit board containing the relay switch array 430 and the controller 432.

## Claims

1. A disconnect system (20) to be connected between a DC power source (22) comprising a battery system (26) and a load (24) comprising a load (24) of a vehicle, the disconnect system (20) comprising:
a master switch (32) defining a first master switch terminal (80) electrically connectable to the DC power source (22) and a second master switch terminal (82), the master switch (32) manually operable between a normally open state and a closed state, the master switch (32) configured to stay in the closed state so long as current flows between the master switch terminals (80, 82) and reset to the open state when current no longer flows through the master switch terminals (80, 82);
at least one relay switch (34) defining a first power terminal (90), a second power terminal (92) and a first control terminal (94), the first and second power terminals (90, 92) electrically connected between the second master switch terminal (82) and the load (24) to form a power circuit, wherein the at least one relay switch (34) is switchable between a normally open configuration in which current is prevented from flowing between the first and second power terminals (90, 92) and a closed configuration in which current is allowed to flow between the first and second power terminals (90, 92);
at least one thermostat switch (36) secured to a sensed portion of the load (24); and
a control wire (50b)connected at one end to the at least one thermostat switch (36) and at the other end to the first control terminal (94) of the at least one relay switch (34) to form a control circuit,
wherein the master switch (32), the relay switch (34), and the at least one thermostat switch (36) are configured such that:
when the at least one relay switch (34) is in the closed position, current can flow through the at least one relay switch (34) to the load (24) and through the thermostat switch (36) to the first control terminal (94) to hold the at least one relay switch (34) in the closed configuration;
when a temperature of the at least one thermostat switch (36) reaches a predetermined temperature level, the at least one thermostat switch (36) prevents current from flowing to the first control terminal (94) and thereby resets the at least one relay switch (34) to the open configuration to prevent current from the DC power source (22) from flowing to the load (24) and thereby prevent current from flowing between the master switch terminals (80, 82) and reset the master switch (32).

2. A disconnect system (20) as recited in claim 1, in which the load (24) comprises a converter (170) operatively connected to a compressor (172) for a vehicle heating and cooling system.

3. A disconnect system (20) as recited in claim 1, in which the load (24) comprises a compressor (172) for a vehicle heating and cooling system.

4. A heating/cooling system for a vehicle having a DC power source (22) comprising a battery system (26), the heating/cooling system comprising:
a compressor (172);
a converter (170) operatively connected to the compressor (172);
the disconnect system (20) according to claim 1 wherein:
the compressor (172) and converter (170) form the load (24);
the at least one relay switch (34) is electrically connected between the DC power source (22) and the converter (170);
the at least one thermostat switch (36) is secured to a sensed portion of at least one of the compressor (172) and the converter (170).

5. A method of heating and cooling a vehicle having a DC power source (22) comprising a battery system (26), the method comprising the steps of:
operatively connecting a converter (170) to a compressor (172);
providing a master switch (32) defining a first master switch terminal (80) electrically connectable to the DC power source (22) and a second master switch terminal (82), the master switch (32) manually operable between a normally open state and a closed state, the master switch (32) configured to stay in the closed state so long as current flows between the master switch terminals (80, 82) and reset to the open state when current no longer flows through the master switch terminals (80, 82);
electrically connecting the first master switch terminal (80) to the DC power source (22);
electrically connecting first and second power terminals (90, 92) of at least one relay switch (34) between the second master switch terminal (82) and the converter (170) to form a power circuit, wherein the at least one relay switch (34) is switchable between a normally open configuration in which current is prevented from flowing between the first and second power terminals (90, 92) and a closed configuration in which current is allowed to flow between the first and second power terminals (90, 92), the relay switch (34) further defining a first control terminal (94);
securing at least one thermostat switch (36) to a sensed portion of at least one of the compressor (172) and the converter (170);
forming a control circuit by electrically connecting a control wire between the at least one thermostat switch (36) and the first control terminal (94) of the at least one relay switch (34);
arranging the at least one relay switch (34) in the closed configuration such that current can flow through the at least one relay switch (34) to at least one of the converter (170) and the compressor (172) and through the thermostat switch (36) to the first control terminal (94) to hold the at least one relay switch (34) in the closed configuration; and
when a temperature of the at least one thermostat switch (36) reaches a predetermined temperature level, opening the at least one thermostat switch (36) to prevent current from flowing to the first control terminal (94) and thereby resetting the at least one relay switch (34) to the open configuration to prevent current from flowing between the master switch terminals (80, 82) and reset the master switch (32).

6. A method as recited in claim 5, in which the battery system (26) comprises a main battery (480) and an auxiliary battery (482) and the load (24) comprises a chassis load (24) and an auxiliary load (24), the method further comprising the steps of:
operatively connecting a first relay switch (34) between the main battery (480) and the chassis load (24); and
operatively connecting a second relay switch (34) between the auxiliary battery (482) and the auxiliary load (24).

## Patentansprüche

1. Unterbrechersystem (20) zum Anschließen zwischen einer Gleichstromquelle (22), die ein Batteriesystem (26) umfasst, und einem Verbraucher (24), der eine Last (24) eines Fahrzeugs umfasst, wobei das Unterbrechersystem (20) umfasst:
einen Hauptschalter (32), der einen ersten Hauptschalteranschluss (80), der mit der Gleichstromquelle (22) elektrisch verbindbar ist, und einen zweiten Hauptschalteranschluss (82) definiert, wobei der Hauptschalter (32) manuell zwischen einem normalerweise offenen Zustand und einem geschlossenen Zustand schaltbar ist,
wobei der Hauptschalter (32) konfiguriert ist, um in dem geschlossenen Zustand zu bleiben, solange Strom zwischen den Hauptschalteranschlüssen (80, 82) fließt, und in den offenen Zustand zurückzukehren, wenn kein Strom mehr durch die Hauptschalteranschlüsse (80, 82) fließt;
mindestens einen Relaisschalter (34), der einen ersten Stromanschluss (90), einen zweiten Stromanschluss (92) und einen ersten Steueranschluss (94) definiert, wobei der erste und der zweite Stromanschluss (90, 92) zwischen dem zweiten Hauptschalteranschluss (82) und der Last (24) elektrisch verbunden sind, um einen Stromkreis zu bilden, wobei der mindestens eine Relaisschalter (34) zwischen einer normalerweise offenen Konfiguration, in der Strom daran gehindert wird, zwischen dem ersten und dem zweiten Stromanschluss (90, 92) zu fließen, und einer geschlossenen Konfiguration, in der Strom zwischen dem ersten und dem zweiten Stromanschluss (90, 92) fließen kann, schaltbar ist; und
mindestens einen Thermostatschalter (36), der an einem abgetasteten Abschnitt der Last (24) angebracht ist; und
einen Steuerdraht (50b), der an einem Ende mit dem mindestens einen Thermostatschalter (36) und am anderen Ende mit dem ersten Steueranschluss (94) des mindestens einen Relaisschalters (34) verbunden ist, um eine Steuerschaltung zu bilden,
wobei der Hauptschalter (32), der Relaisschalter (34) und der mindestens eine Thermostatschalter (36) so konfiguriert sind, dass:
wenn sich der mindestens eine Relaisschalter (34) in der geschlossenen Stellung befindet, Strom durch den mindestens einen Relaisschalter (34) zur Last (24) und durch den Thermostatschalter (36) zum ersten Steueranschluss (94) fließen kann, um den mindestens einen Relaisschalter (34) in der geschlossenen Konfiguration zu halten;
wenn eine Temperatur des mindestens einen Thermostatschalters (36) ein vorgegebenes Temperaturniveau erreicht, der mindestens eine Thermostatschalter (36) verhindert, dass Strom zu der ersten Steuerklemme (94) fließt, und dadurch den mindestens einen Relaisschalter (34) in die offene Konfiguration zurücksetzt, um zu verhindern, dass Strom von der Gleichstromquelle (22) zu der Last (24) fließt, und dadurch zu verhindern, dass Strom zwischen den Hauptschalterklemmen (80, 82) fließt und den Hauptschalter (32) zurückzusetzen.

2. Unterbrechersystem (20) nach Anspruch 1, bei dem die Last (24) einen Wandler (170) umfasst, der betriebsmäßig mit einem Kompressor (172) für ein Fahrzeugheiz- und -kühlsystem verbunden ist.

3. Unterbrechersystem (20) nach Anspruch 1, bei dem die Last (24) einen Kompressor (172) für ein Fahrzeug-Heiz- und Kühlsystem umfasst.

4. Heiz-/Kühlsystem für ein Fahrzeug mit einer Gleichstromquelle (22), die ein Batteriesystem (26) umfasst, wobei das Heiz-/ Kühlsystem umfasst:
einen Kompressor (172);
einen Wandler (170), der betriebsmäßig mit dem Kompressor (172) verbunden ist;
das Unterbrechersystem (20) nach Anspruch 1, wobei:
der Kompressor (172) und der Wandler (170) die Last (24) bilden;
der mindestens eine Relaisschalter (34) elektrisch zwischen der Gleichstromquelle (22) und dem Wandler (170) angeschlossen ist;
der mindestens eine Thermostatschalter (36) an einem abgetasteten Abschnitt des Kompressors (172) und/oder des Wandlers (170) angebracht ist.

5. Verfahren zum Heizen und Kühlen eines Fahrzeugs mit einer Gleichstromquelle (22), die ein Batteriesystem (26) umfasst, wobei das Verfahren die Schritte umfasst:
betriebsmäßiges Verbinden eines Wandlers (170) mit einem Kompressor (172);
Bereitstellen eines Hauptschalters (32), der einen ersten Hauptschalteranschluss (80), der mit der Gleichstromquelle (22) elektrisch verbindbar ist, und einen zweiten Hauptschalteranschluss (82) definiert, wobei der Hauptschalter (32) manuell zwischen einem normalerweise offenen Zustand und einem geschlossenen Zustand schaltbar ist, wobei der Hauptschalter (32) konfiguriert ist, um in dem geschlossenen Zustand zu bleiben, solange Strom zwischen den Hauptschalteranschlüssen (80, 82) fließt, und in den offenen Zustand zurückzukehren, wenn kein Strom mehr durch die Hauptschalteranschlüsse (80, 82) fließt;
elektrisches Verbinden des ersten Hauptschalteranschlusses (80) mit der Gleichstromquelle (22);
elektrisches Verbinden eines ersten und eines zweiten Stromanschlusses (90, 92) mindestens eines Relaisschalters (34) zwischen dem zweiten Hauptschalteranschluss (82) und dem Wandler (170), um einen Stromkreis zu bilden, wobei der mindestens eine Relaisschalter (34) zwischen einer normalerweise offenen Konfiguration, in der Strom daran gehindert wird, zwischen dem ersten und dem zweiten Stromanschluss (90, 92) zu fließen, und einer geschlossenen Konfiguration, in der Strom zwischen dem ersten und dem zweiten Stromanschluss (90, 92) fließen kann, schaltbar ist, wobei der Relaisschalter (34) ferner einen ersten Steueranschluss (94) definiert;
Anbringen mindestens eines Thermostatschalters (36) an einem abgetasteten Abschnitt des Kompressors (172) und/oder des Wandlers (170);
Bilden einer Steuerschaltung durch elektrisches Verbinden eines Steuerdrahtes zwischen dem mindestens einen Thermostatschalter (36) und dem ersten Steueranschluss (94) des mindestens einen Relaisschalters (34);
Einrichten des mindestens einen Relaisschalters (34) in der geschlossenen Konfiguration, so dass Strom durch den mindestens einen Relaisschalter (34) zu dem Wandler (170) und/oder dem Kompressor (172) und durch den Thermostatschalter (36) zu dem ersten Steueranschluss (94) fließen kann, um den mindestens einen Relaisschalter (34) in der geschlossenen Konfiguration zu halten; und
wenn eine Temperatur des mindestens einen Thermostatschalters (36) ein vorgegebenes Temperaturniveau erreicht, Öffnen des mindestens einen Thermostatschalters (36), um zu verhindern, dass Strom zum ersten Steueranschluss (94) fließt, und dadurch Zurücksetzen des mindestens einen Relaisschalters (34) in die offene Konfiguration, um zu verhindern, dass Strom zwischen den Hauptschalteranschlüssen (80, 82) fließt, und um den Hauptschalter (32) zurückzusetzen.

6. Verfahren nach Anspruch 5, bei dem das Batteriesystem (26) eine Hauptbatterie (480) und eine Hilfsbatterie (482) umfasst und die Last (24) eine Fahrgestelllast (24) und eine Hilfslast (24) umfasst, wobei das Verfahren ferner die folgenden Schritte umfasst:
betriebsmäßiges Verbinden eines ersten Relaisschalters (34) zwischen der Hauptbatterie (480) und der Fahrgestelllast (24); und
betriebsmäßiges Verbinden eines zweiten Relaisschalters (34) zwischen der Hilfsbatterie (482) und der Hilfslast (24).

## Revendications

1. Système de déconnexion (20) à connecter entre une source d'alimentation CC (22) comprenant un système de batteries (26) et une charge (24) comprenant une charge (24) d'un véhicule, le système de déconnexion (20) comprenant :
un commutateur principal (32) définissant une première borne de commutateur principal (80) pouvant être connectée électriquement à la source d'alimentation CC (22) et une seconde borne de commutateur principal (82), le commutateur principal (32) pouvant être actionné manuellement entre un état normalement ouvert et un état fermé, le commutateur principal (32) étant configuré pour rester dans l'état fermé tant que du courant circule entre les bornes de commutateur principal (80, 82) et pour être réinitialiser à l'état ouvert lorsque le courant ne circule plus à travers les bornes de commutateur principal (80, 82) ;
au moins un commutateur relais (34) définissant une première borne d'alimentation (90), une seconde borne d'alimentation (92) et une première borne de commande (94), les première et seconde bornes d'alimentation (90, 92) étant électriquement connectées entre la seconde borne de commutateur principal (82) et la charge (24) pour former un circuit d'alimentation, dans lequel le au moins un commutateur relais (34) peut être commuté entre une configuration normalement ouverte dans laquelle un courant est empêché de circuler entre les première et seconde bornes d'alimentation (90, 92) et une configuration fermée dans laquelle un courant est autorisé à circuler entre les première et seconde bornes d'alimentation (90, 92) ;
au moins un commutateur de thermostat (36) fixé à une partie détectée de la charge (24) ; et
un fil de commande (50b) connecté à une extrémité au au moins un commutateur de thermostat (36) et à l'autre extrémité à la première borne de commande (94) du au moins un commutateur relais (34) pour former un circuit de commande,
dans lequel le commutateur principal (32), le commutateur relais (34) et le au moins un commutateur de thermostat (36) sont configurés de telle sorte que :
lorsque le au moins un commutateur relais (34) est dans la position fermée, du courant peut circuler à travers le au moins un commutateur relais (34) vers la charge (24) et à travers le commutateur de thermostat (36) vers la première borne de commande (94) pour maintenir le au moins un commutateur relais (34) dans la configuration fermée ;
lorsqu'une température du au moins un commutateur de thermostat (36) atteint un niveau de température prédéterminé, le au moins un commutateur de thermostat (36) empêche un courant de circuler vers la première borne de commande (94) et réinitialise ainsi le au moins un commutateur relais (34) à la configuration ouverte pour empêcher du courant provenant de la source d'alimentation CC (22) de circuler vers la charge (24) et empêcher ainsi du courant de circuler entre les bornes de commutateur principal (80, 82) et réinitialiser le commutateur principal (32).

2. Système de déconnexion (20) selon la revendication 1, dans lequel la charge (24) comprend un convertisseur (170) connecté de manière opérationnelle à un compresseur (172) pour un système de chauffage et de refroidissement de véhicule.

3. Système de déconnexion (20) selon la revendication 1, dans lequel la charge (24) comprend un compresseur (172) pour un système de chauffage et de refroidissement de véhicule.

4. Système de chauffage/refroidissement pour un véhicule ayant une source d'alimentation CC (22) comprenant un système de batteries (26), le système de chauffage/refroidissement comprenant :
un compresseur (172) ;
un convertisseur (170) connecté de manière opérationnelle au compresseur (172) ;
le système de déconnexion selon la revendication 1 dans lequel :
le compresseur (172) et le convertisseur (170) forment la charge (24) ;
le au moins un commutateur relais (34) est électriquement connecté entre la source d'alimentation CC (22) et le convertisseur (170) ;
le au moins un commutateur de thermostat (36) est fixé à une partie détectée d'au moins l'un parmi le compresseur (172) et le convertisseur (170).

5. Procédé de chauffage et de refroidissement d'un véhicule ayant une source d'alimentation CC (22) comprenant un système de batteries (26), le procédé comprenant les étapes consistant à :
connecter de manière opérationnelle un convertisseur (170) à un compresseur (172) ;
fournir un commutateur principal (32) définissant une première borne de commutateur principal (80) pouvant être connectée électriquement à la source d'alimentation CC (22) et une seconde borne de commutateur principal (82), le commutateur principal (32) pouvant être actionné manuellement entre un état normalement ouvert et un état fermé, le commutateur principal (32) étant configuré pour rester dans l'état fermé tant que du courant circule entre les bornes de commutateur principal (80, 82) et pour être réinitialiser à l'état ouvert lorsque le courant ne circule plus à travers les bornes de commutateur principal (80, 82) ;
connecter électriquement la première borne de commutateur principal (80) à la source d'alimentation CC (22) ;
connecter électriquement des première et seconde bornes d'alimentation (90, 92) d'au moins un commutateur relais (34) entre la seconde borne de commutateur principal (82) et le convertisseur (170) pour former un circuit d'alimentation, dans lequel le au moins un commutateur relais (34) peut être commuté entre une configuration normalement ouverte dans laquelle un courant est empêché de circuler entre les première et seconde bornes d'alimentation (90, 92) et une configuration fermée dans laquelle un courant est autorisé à circuler entre les première et seconde bornes d'alimentation (90, 92), le commutateur relais (34) définissant en outre une première borne de commande (94) ;
fixer au moins un commutateur de thermostat (36) à une partie détectée d'au moins l'un parmi le compresseur (172) et le convertisseur (170) ;
former un circuit de commande en connectant électriquement un fil de commande entre le au moins un commutateur de thermostat (36) et la première borne de commande (94) du au moins un commutateur relais (34) ;
agencer le au moins un commutateur relais (34) dans la configuration fermée de sorte que du courant peut circuler à travers le au moins un commutateur relais (34) vers au moins l'un du convertisseur (170) et du compresseur (172) et à travers le commutateur de thermostat (36) vers la première borne de commande (94) pour maintenir le au moins un commutateur relais (34) dans la configuration fermée ; et
lorsqu'une température du au moins un commutateur de thermostat (36) atteint un niveau de température prédéterminé, ouvrir le au moins un commutateur de thermostat (36) pour empêcher un courant de circuler vers la première borne de commande (94) et réinitialiser ainsi le au moins un commutateur relais (34) à la configuration ouverte pour empêcher un courant de circuler entre les bornes de commutateur principal (80, 82) et réinitialiser le commutateur principal (32).

6. Procédé selon la revendication 5, dans lequel le système de batteries (26) comprend une batterie principale (480) et une batterie auxiliaire (482) et la charge (24) comprend une charge de châssis (24) et une charge auxiliaire (24), le procédé comprenant en outre les étapes consistant à :
connecter de manière opérationnelle un premier commutateur relais (34) entre la batterie principale (480) et la charge de châssis (24) ; et
connecter de manière opérationnelle un second commutateur relais (34) entre la batterie auxiliaire (482) et la charge auxiliaire (24).
